# EUROPEAN PATENT SPECIFICATION

(11) **EP 1 945 496 B1**
(45) Date of publication and mention of the grant of the patent: **11.08.2010**
(21) Application number: 06808415.1
(22) Date of filing: 06.11.2006
(51) Int. Cl.: B62D 29/00, B62D 29/04, B60R 21/34

(54) **COMPOSITE MATERIAL**
VERBUNDWERKSTOFF
MATERIAU COMPOSITE

(30) Priority: 10.11.2005 GB 0522960
(43) Date of publication of application: 23.07.2008
(73) Proprietor: B.I. Group Plc, Maybrook Industrial Estate Minworth, Sutton Coldfield West Midlands B76 1 BA (GB)
(72) Inventor: BIRRELL, Michael, Hertfordshire SG8 0JP (GB)
(74) Representative: Gosnall, Toby
(86) International application number: PCT/GB2006/004118
(87) International publication number: WO 2007/054671

(56) References cited:
- EP-A- 0 392 904
- EP-A2- 1 362 770
- EP-A2- 1 512 613
- WO-A-2004/071761
- JP-A- 59 050 870
- JP-A- 2002 284 038

## Description

### Field of the invention

The present invention relates to a composite material, particularly, but not exclusively, to a composite material arranged to be used in a vehicle body panel.

### Background of the invention

It is convenient to set the background of the present invention with reference to the field of vehicle body panels although it has wider applicability. It is known to fabricate car body panels (such as the bonnet/hood) from a plastics material. Generally, such a plastics body panel is made from a thermoset composite but it is possible to manufacture such a panel from a thermoplastic composite. In the case of thermoplastic composites the panels tend to behave elastically during impacts (unless the elastic limit is exceeded) such that they return to their original shape. This can be disadvantageous during certain collisions such as when the vehicle collides with a pedestrian or animal, etc. In such instances the elastic behaviour can tend to launch the pedestrian, etc. away from the vehicle thereby increasing his/her injuries.

GB 305 694 shows a panel in which a polymer material is used to protect a metal structural member positioned within the polymer.

JP59050870 discloses a panel for a vehicle in which the structure comprises an inner layer formed of a resin sheet containing reinforcing fibres; a foil element and an outer layer formed of a resin sheet not containing reinforcing fibres. The outer layer does not contain fibres in order to improve the outer surface of the panel.

EP0392904 discloses a panel for a motor vehicle according to the preamble of the independent claims in which a corrugated metal grill is inserted in a core to separate and brace outer covers of glass fibre reinforced plastics.

EP1362770 discloses a panel for a vehicle roof in which an aluminium foil is used to provide a mechanical barrier between an inner layer containing fibres and an outer resin layer.

### Summary of the invention

According to a first aspect of the invention there is provided a plastics material panel according to claim 1.

It is believed that a thermoset material would not be suitable for embodiments of the invention since they are likely to be too brittle, and therefore not ductile enough, such that they will tend to fail upon an impact.

Thus, the panel may comprise a laminated plastics material structure having at least a first cover layer and a second cover layer, in between which, in at least a portion of the panel, there is provided a core layer comprising a deformable element arranged to undergo permanent deformation during deformation of the panel.

Generally the panel is a vehicle body panel. However, this need not be the case and the panel may be any panel which may suffer from an impact.

According to a second aspect of the invention there is provided a method according to claim 8.

Generally, the method will be used to manufacture vehicle body panels. However, this need not be the case and the method may be applied to any panel which may suffer from an impact.

The core layer may comprise a thermoplastics material matrix in which a deformable element is arranged. Such a matrix is convenient because it may improve the adhesion between the cover layers to adhere and the deformable elements.

The core layer may comprise a material provided by Bekaert under the Trade Mark Santoprene.

There is provided a car body panel, such as a bonnet, comprising a laminated plastics material structure having at least a first cover layer and a second cover layer, in between which, in a central region of the panel there is provided a core layer comprising a plurality of metallic wires arranged such that the panel undergoes permanent deformation in the central region during an impact thereto.

An advantage of the invention is reducing pedestrian injuries.

### Brief description of the drawings

There now follows by way of example only a detailed description of embodiments of the present invention with reference to the accompanying drawings of which:
**Figure 1** schematically shows an exploded view of the layers within a formed composite sheet according to an embodiment of the invention;
**Figure 2** schematically shows an enlargement of one of the layers shown in Figure 1;
**Figure 3** schematically shows a vehicle body panel in which a portion comprises a composite material according to an embodiment of the invention;
**Figure 4** schematically shows a section through the body panel along line A of Figure 3; and
**Figure 5** schematically shows various forms in which a deformable element may be provided.

### Detailed description of the drawings

The formed composite sheet 100 shown in exploded form comprises, in this embodiment, five layers 102 to 110. In other embodiments there may be other numbers of layers.

In this embodiment the topmost two layers 102,104 together provide what may be termed a first cover layer 112; i.e. the cover layer comprises two sub-layers. The bottommost two layers 108,110 together provide what may be termed a second cover layer 114; and again comprises two sub layers. There may be other numbers of sub-layers within the cover layers. In between the first 112 and the second 114 cover layer there is provided a core layer 106 which comprises a deformable element.

In it's widest sense the deformable element that is incorporated in the composite sheet such that it substantially stops, or at least reduces, the composite sheet from exhibiting elastic behaviour. For example embodiments may be arranged such that the sheet undergoes permanent deformation during an impact. There may be some recovery from the deformation (i.e. partial elastic behaviour) but the deformable element may largely reduce the recovery thereby helping to prevent energy being returned to the object that impacted the sheet. It is known that thermoplastic polymers have a 'memory' and exhibit an ability to recover their form after an impact. The introduction of a core layer comprising a deformable element (which may be thought of as stiffer than the cover layers) that does not have such a recovery property helps to prevent, or substantially reduce, the overall recovery of the panel.

Generally, the deformable element will comprise a metallic matrix. The metallic matrix may usually be steel or a steel alloy, but could equally be other metals/alloys, such as aluminium or the like.

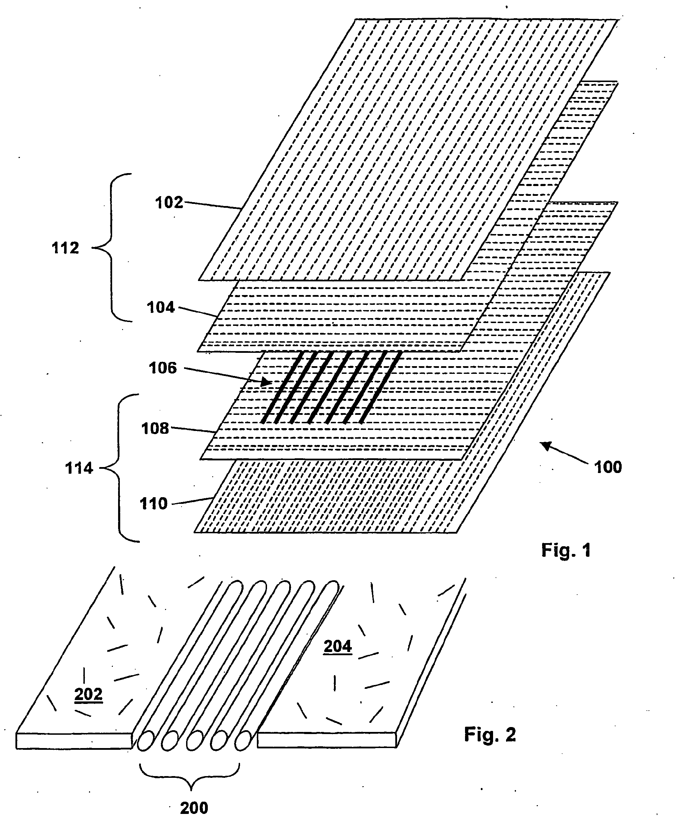

In the embodiment of Figure 1 the layer 106 comprising the deformable element is shown as comprising a plurality of metallic wires without a surrounding matrix. This is one possibility although the deformable element may be provided in a number of forms as described elsewhere. Moreover, the deformable elements may generally be provided within a thermoplastics material matrix in order to facilitate the fabrication of the composite material. In embodiments in which the deformable element is provided in a thermoplastics material matrix it may be found that the plastics material adheres better to the deformable element.

In some embodiments there may be provided a plurality of core layers, which may or may not have other layers in between. Such additional core layers may be used to tailor the properties of the material / panel in which the material is used.

As shown in Figure 1 each of the cover layers 112,114 may comprise a plurality of sub-layers. In this embodiment each of the cover layers is shown as comprising what is termed a 0/90 lay up of fibre reinforcement; i.e. a first sub-layer having fibres oriented at 0° and a second sub-layer having fibres oriented at 90° relative to the first sub-layer. Thus, the properties of the cover layers 112,114 can be tailored as desired by appropriate use of reinforcement.

Thus, the structure may be thought of as a composite lay-up which has first and second cover layers together with a core layer which itself comprises a deformable element. In such an embodiment, the properties of a consolidated panel are different when compared to the properties of each layer.

An advantage of using fibre reinforcement in the cover layers is that increased thermal stability may be achieved. Such stability may be advantageous in applications such as vehicle panels where it is helpful if the panel does not undergo significant expansion over its operational temperature range (the extremes of which could run from -40°C to a solar loading of 130°C). Further, panels may be exposed to ovens during a painting process which can expose the panel to temperatures of on the order of 200°C. In view of the large temperature ranges, it is therefore advantageous that embodiments of the invention match the thermal expansion of the cover layers to that of the metallic element. Such matching may be achieved by appropriate arrangement of reinforcing fibres in the cover layers.

-Thermal stability may be further increased if uni-directional fibres are used as a reinforcing element in the cover layers. As such a sub-layer of the cover layer may comprise reinforcing fibres running in substantially a single direction such that the overall cover layer comprises fibres running in different directions.

The sub-layers within each of the cover layers 112,114 (or indeed the core layer) may comprise any of the following: a pre-preg lay up of oriented fibre reinforcement; random fibre reinforced thermoplastic; self reinforced polymer sheet; a quasi isotropic lay-up of fibres; or a woven thermoplastic composite matrix or the like. Provision of the cover layers, as shown in this embodiment, is advantageous because it allows a generally smooth top surface to be provided which masks any imperfections in surface aspect caused by the deformable element in the core layer 106. Such imperfections would generally be referred to as witness marks. Such a generally smooth surface is beneficial in embodiments which are intended for use as a vehicle body panel in order that a good paint finish can be achieved on the panel (or indeed in other application in which a high class finish of the panel is desired). The use of substantially uni-directional fibres within a sub-layer of a cover layer may increase the resistance to witness marks in the surface of the panel.

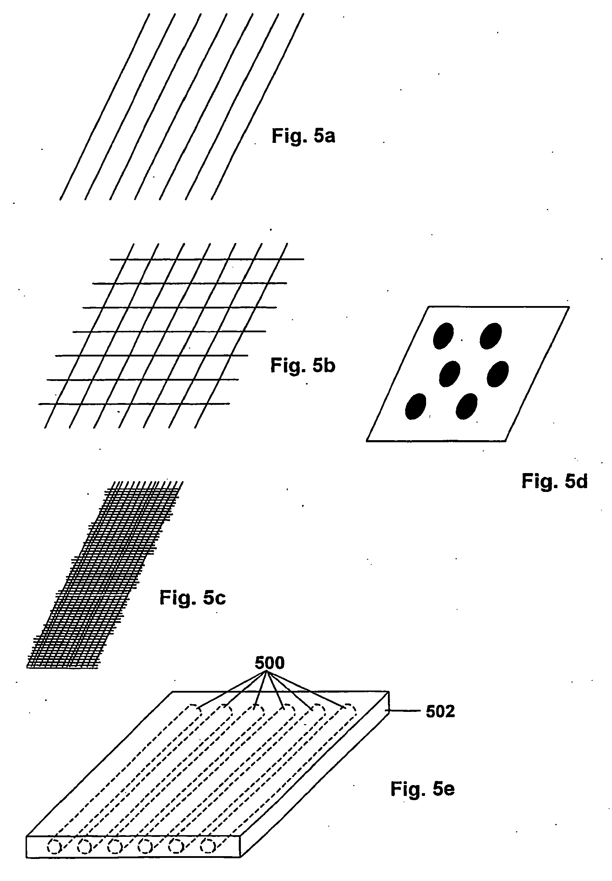

In this embodiment the metallic deformable element may comprise any one of the following: wire, cord, braid, perforated sheet or mesh; wire cord, braid, perforated sheet or mesh which has been encapsulated in a thermoplastics material compatible with the plastics material in the cover layers. Figure 5 shows examples of such embodiments: Figure 5a shows a plurality of wires; Figure 5b shows a mesh, Figure 5c shows a braid and Figure 5d shows a perforated sheet. Each of these, or other, deformable members may be provided within a matrix.

Figure 5e shows a plurality of wires 500 within a thermoplastics material matrix 502. Any other form of deformable element may also be provided in a similar matrix 502. Some embodiments of the invention may comprise additional layers than those shown in Figure 1. There may for example be a plurality of core layers comprising deformable layers. There may be additional sub layers within each of the cover layers.

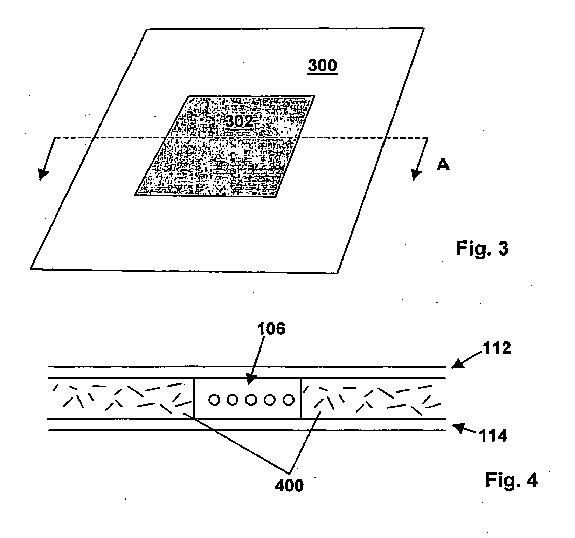

In some embodiments, for example as shown in Figure 3, the core layer comprising the deformable element may be provided in a portion of the overall area. In such arrangement the deformable element may be considered to be positioned in a localised area. Figure 3 shows a vehicle body panel 300 (for example a vehicle bonnet/hood, a door, a wing, a roof panel, or the like) in which a core layer comprising a deformable element is provided at a central region 302 thereof. In alternative embodiments the deformable element may be provided in a different region, such the front, rear etc. In some embodiments the formed composite sheet may comprise more that one deformable element, such as 2, 3, 4, 10 or any number there between. Furthermore the composite sheet may comprise deformable elements of alternative topologies, such a circular shaped or the like. A person skilled in the art will readily appreciate that different applications may require different configurations and be able to adapt the composite sheet accordingly.

In such embodiments, areas of the composite material / vehicle body panel may comprise one or more infill-core 400 layers in addition to the two cover layers 112,114 in areas in which the deformable element is not provided. Such infill-core layers 400 are advantageous in order to help ensure that the thickness of the overall panel / composite material remains substantially constant, if it is desired to have a constant thickness. Such infill-core layers 400 will generally comprise a thermoplastics material which is compatible with the thermoplastics material in the cover layers 112,114, or indeed are substantially the same thermoplastics material. The infill-core layers 400 may or may not be reinforced, although Figure 4 shows these layers to be reinforced with a randomly oriented short fibre. Compatible is intended to mean that the thermoplastics can mix with one another without affecting the properties of either of the thermoplastics or of the combination. In one case the compatible thermoplastics may comprise the same, or substantially the same, polymeric material.

In some embodiments, an infill-core layer may be used, of an appropriate thickness, in order to tailor the thickness of the panel as desired. For example, if a thicker portion of the panel is desired then a thicker infill-core layer may be used and if a thinner panel is desired then a thinner infill-core layer may be used.

An embodiment in which the deformable element covers less than the area of the panel is shown in Figure 2. The core layer 200 containing the deformable element is shown in a central region and an infill-core layers 202, 204 is shown on each side thereof. In the embodiment shown, the infill-core layers are reinforced with random fibres within the plastics material matrix. Other embodiments may not be reinforced or may be reinforced with other known techniques.

A vehicle body panel 300 as for example described in relation to Figures 3 and 4 may be advantageous since it allows a panel to be provided which is substantially smooth and therefore may allow a high class paint finish to be achieved. Furthermore, the deformable elements allow the deformation characteristics of the panel to be tailored. In some panels, it is advantageous if the panel does not show elastic behaviour once it is deformed. For example, in a vehicle bonnet/hood it has been found that injury to pedestrians which have been hit by the vehicle can be increased if the bonnet/hood springs back to its original shape (i.e. exhibits elastic behaviour) because the pedestrian may be propelled by the panel returning to its original shape increasing his/her injuries. By appropriate selection of the deformable elements a composite thermoplastics material panel may be provided which exhibits permanent deformation and thereby should not propel a pedestrian in this manner.

The thermoplastics material / vehicle body panel may be fabricated as is known in the art by combining (often referred to as laying up) a plurality of layers (e.g. in the example of Figure 1 the layers 102-110) and then heating the layers to their melt temperature and consolidating the structure under pressure. Processes such as vacuum consolidation, pressing or the like may be used to consolidate the composite into the required form. The laying up may be performed automatically by machine in a high volume process, or manually in a lower volume process. Thus, a homologous structure results once the consolidation is performed.

It will be readily appreciated that by consolidating the panel this has the effect of substantially removing any gas pockets within the composite. The result is a composite that is constructed as a substantially solid material.

If the deformable insert is metallic, or another material with a high thermal conductivity, it may be possible to use the deformable element to conduct heat into the material for this consolidation process.

Generally, a panel formed by the process outlined in this embodiment does not have any areas of high curvature (e.g. a vehicle bonnet / hood) and therefore the deformable insert need not be deformed before the consolidation process; i.e. it may, in such embodiment, be used in sheet form. In other embodiments, if there were a higher degree of curvature it may be necessary to shape the deformable element before the layers are laid up before the consolidation process.

The thermoplastics material may be any suitable thermoplastics material such as polypropylene, PET, PBT, polycarbonate, nylon thermoplastic polyurethane or thermoplastic material blends.

In the example of polypropylene as the thermoplastics material in the cover and core layers the structure would be heated to between roughly 180°C and 220°C with a consolidation pressure of roughly 1 bar or greater. Other thermoplastics materials may require other temperatures and pressures as will be appreciated by the person skilled in the art.

In one embodiment, the deformable core layer 106 is provided as a layer provided by Bekaert under the name Santoprene™, which in one embodiment comprises wire of diameter or roughly 1 mm surrounded by a thermoplastics matrix. This is of a similar structure to that shown in Figure 5d. It will be readily appreciated however that alternative materials may be used. Indeed the wire diameter do not need to be 1 mm and may be 0.1 mm, 0.5 mm, 2 mm, 5 mm or any number there between. In such alternative arrangements, the properties of the material of the deformable element, such as the metal used, may dictate which geometry is best suited for the application.

Although primarily described in relation to a vehicle body panel, embodiments of the invention may also provide any panel which may be subject to an impact. For example, a road sign, a panel for a door, or the like.

A typical thickness of a panel according to an embodiment of the invention is likely to be roughly in the range of between 1mm and 10mm in thickness. More generally, the panel may be roughly 5mm or less.

## Claims

1. A plastics material panel comprising a laminated plastics material structure having at least a first plastics cover layer (112) and a second cover layer (114), each of which is fibre reinforced, and in between which, in at least a portion of the panel, there is provided a core layer (106) comprising at least one deformable metallic element (500) wherein the introduction of the deformable element (500) is arranged to reduce the elastic behaviour of the plastics material structure, when compared to the panel without the element (500), such that the panel undergoes permanent deformation during an impact **characterised in that** the cover layers (112, 114) each comprises at least a first fibre reinforced sub-layer (102, 104, 108, 110) having fibres running in substantially a single direction.

2. A panel according to claim 1 in which the metallic element (500) is provided in any of the following forms: a braid, a wire, a perforated plate, a mesh, a sheet.

3. A panel according to claim 1 or claim 2 wherein there is provided a plurality of deformable metallic elements (500).

4. A panel according to any preceding claim, wherein there is provided at least one infill core layer (400), arranged in areas of the core layer (106) where there is no deformable element (500).

5. A panel according to any preceding claim in which each cover layer (112, 114) comprises at least the first (104, 108) and a second (102, 110) sub-layers wherein the fibre reinforcement within the first sub-layer (104, 108) is arranged to be substantially at 90 degrees to the fibre reinforcement in the second sub-layer (102, 110).

6. A panel according to claim 4 in which each of the cover layers (112, 114) each comprises the same, or at least a compatible, matrix material compared to the at least one infill core layer (400).

7. A panel according to any preceding claim which is a vehicle body panel, including a bonnet or hood, a door, a roof panel.

8. A panel according to any of claims 1 to 4 in which the sub-layer comprises a woven thermoplastic composite matrix.

9. A method of manufacturing a plastics material panel comprising:
i. arranging at least a core layer (106) comprising a deformable metallic element (500) and a fibre-reinforced cover layer (112, 114) on either side thereof;
ii. applying heat and pressure to consolidate the layers (106, 112, 114)
**characterised in that** each cover layer (112,114) comprises at least a first sub-layer (102,104,108,110) having fibres running in substantially a single direction.

10. A method according to claim 9 in which the core layer (106) extends for less than the entire area of the panel.

11. A method according to claim 9 or claim 10 in which an infill-core layer (400) is provided in areas of the core layer (106) in which there is no deformable element (500).

12. A method according to claim 11 in which the infill-core layer (400) is used to tailor the thickness of the panel to provide thickening or thinning of the panel.

13. A method according to any of claims 9 to 12 in which the core layer (106) is provided as a matrix of plastics material (502) containing the deformable element (500).

14. A method according to any of claims 9 to 13 which is used to produce a vehicle body panel.

15. A method according to any of claims 9 to 14 in which the deformable element (500) is provided in any of the following forms: a braid, a wire, a perforated plate, a mesh, a sheet.

## Patentansprüche

1. Kunststoffplatte, umfassend einen laminierten
Kunststoffmaterialaufbau, der mindestens eine erste Kunststoff-Deckschicht (112) und eine zweite Deckschicht (114) aufweist, von denen jede faserverstärkt ist, und zwischen denen, zumindest in einem Teil der Platte, eine Kernschicht (106) vorgesehen ist, die zumindest ein verformbares metallenes Element (500) umfasst, wobei die Einführung des verformbaren Elements (500) eingerichtet ist, um das elastische Verhalten des Kunststoffmaterialaufbaus im Vergleich zu der Platte ohne das Element (500) zu reduzieren, sodass die Platte während eines Stoßes eine dauernde Verformung erleidet, **dadurch gekennzeichnet, dass** die Deckschichten (112, 114) jeweils mindestens eine faserverstärkte Teilschicht (102, 104, 108, 110) umfassen, bei denen Fasern im Wesentlichen in einer einzigen Richtung verlaufen.

2. Platte nach Anspruch 1, bei der das metallene Element (500) in einer beliebigen der folgenden Formen vorgesehen ist: als Geflecht, als Draht, als perforierte Platte, als Gewebe, als Blech.

3. Platte nach Anspruch 1 oder 2, wobei eine Vielzahl von verformbaren metallenen Elementen (500) vorgesehen ist.

4. Platte nach einem der vorangehenden Ansprüche, wobei zumindest eine Füllungs-Kernschicht (400) vorgesehen ist, die in Flächen der Kernschicht (106) angeordnet ist, in denen es kein verformbares Element (500) gibt.

5. Platte nach einem der vorangehenden Ansprüche, bei der jede Deckschicht (112, 114) mindestens die erste (104, 108) und eine zweite (102, 110) Teilschicht umfasst, wobei die Faserverstärkung innerhalb der ersten Teilschicht (104, 108) so angeordnet ist, dass sie im Wesentlichen um 90 Grad zu der Faserverstärkung in der zweiten Teilschicht (102, 110) liegt.

6. Platte nach Anspruch 4, bei der jede der Deckschichten (112, 114) jeweils dasselbe oder zumindest ein kompatibles Matrixmaterial im Vergleich zu der mindestens einen Füllungs-Kernschicht (400) umfasst.

7. Platte nach einem der vorangehenden Ansprüche, die eine Fahrzeugkarosserieplatte ist, einschließlich einer Motorhaube oder Frontklappe, einer Tür, einer Dachplatte.

8. Platte nach einem der Ansprüche 1 bis 4, wobei die Teilschicht eine gewebte thermoplastische Verbundwerkstoff-Matrix umfasst.

9. Verfahren zur Herstellung einer Kunststoffplatte, umfassend:
i. Anordnen mindestens einer Kernschicht (106), umfassend ein verformbares metallenes Element (500), und einer faserverstärkten Deckschicht (112, 114) an beiden Seiten davon;
ii. Anwenden von Wärme und Druck, um die Schichten (106, 112, 114) zu verbinden,
**dadurch gekennzeichnet, dass** jede Deckschicht (112, 114) mindestens eine erste Teilschicht (102, 104, 108, 110) umfasst, die Fasern aufweist, die im Wesentlichen in einer einzigen Richtung verlaufen.

10. Verfahren nach Anspruch 9, bei dem sich die Kernschicht (106) über weniger als die gesamte Fläche der Platte erstreckt.

11. Verfahren nach Anspruch 9 oder Anspruch 10, wobei eine Füllungs-Kernschicht (400) in Flächen der Kernschicht (106) vorgesehen ist, in denen es kein verformbares Element (500) gibt.

12. Verfahren nach Anspruch 11, bei dem die Füllungs-Kernschicht (400) dazu benutzt wird, die Dicke der Platte anzupassen, um ein Verdicken oder Verdünnen der Platte vorzusehen.

13. Verfahren nach einem der Ansprüche 9 bis 12, wobei die Kernschicht (106) als Matrix aus Kunststoffmaterial (502) vorgesehen ist, die das verformbare Element (500) enthält.

14. Verfahren nach einem der Ansprüche 9 bis 13, das benutzt wird, um eine Fahrzeugkarosserieplatte herzustellen.

15. Verfahren nach einem der Ansprüche 9 bis 14, bei dem das verformbare Element (500) in einer beliebigen der folgenden Formen vorgesehen ist: als Geflecht, als Draht, als perforierte Platte, als Gewebe, als Blech.

## Revendications

1. Un panneau en matière plastique comprenant une structure en matière plastique laminée, ayant au moins une première couche de couverture en plastique (112) et une seconde couche de couverture (114), chacune étant renforcée par des fibres, et entre lesquelles, dans au moins une portion du panneau, est prévue une couche centrale (106) comprenant au moins un élément métallique déformable (500), dans lequel l'introduction de l'élément déformable (500) est agencée pour réduire le comportement élastique de la structure en matière plastique, en comparaison du panneau sans l'élément (500), de sorte que le panneau subit une déformation permanente pendant un impact, **caractérisé en ce que** les couches de couverture (112, 114) comprennent chacune au moins une première sous-couche renforcée par des fibres (102, 104, 108, 110) ayant des fibres orientées sensiblement dans une seule direction.

2. Panneau selon la revendication 1, dans lequel l'élément métallique (500) est prévu sous l'une quelconque des formes suivantes : une tresse, un fil, une plaque perforée, une maille, une feuille.

3. Panneau selon la revendication 1 ou 2, dans lequel est prévue une pluralité d'éléments métalliques déformables (500).

4. Panneau selon l'une quelconque des revendications précédentes, dans lequel est prévue au moins une couche centrale de remplissage (400), agencée dans des zones de la couche centrale (106) où il n'y a pas d'élément déformable (500).

5. Panneau selon l'une quelconque des revendications précédentes, dans lequel chaque couche de couverture (112, 114) comprend au moins la première (104, 108) et une seconde (102, 110) sous-couches, le renfort de fibres à l'intérieur de la première sous-couche (104, 108) étant agencé pour être sensiblement à 90 degrés par rapport au renfort de fibres dans la seconde sous-couche (102, 110).

6. Panneau selon la revendication 4, dans lequel chacune des couches de couverture (112, 114) comprend un matériau de matrice identique à ou au moins compatible avec l'au moins une couche centrale de remplissage (400).

7. Panneau selon l'une quelconque des revendications précédentes, qui est un panneau de carrosserie industrielle, y compris un capot, une porte, un panneau de toit.

8. Panneau selon l'une quelconque des revendications 1 à 4 dans lequel la sous-couche comprend une matrice composite thermoplastique tressé.

9. Un procédé de fabrication d'un panneau en matière plastique comprenant :
i. l'agencement d'au moins une couche centrale (106) comprenant un élément métallique déformable (500) et une couche de couverture renforcée par des fibres (112, 114) de chaque côté de celle-ci ;
ii. l'application d'une chaleur et d'une pression pour consolider les couches (106, 112, 114),
**caractérisé en ce que** chaque couche de couverture (112, 114) comprend au moins une première sous-couche (102, 104, 108, 110) ayant des fibres orientées sensiblement dans une seule direction.

10. Procédé selon la revendication 9, dans lequel la couche centrale (106) s'étend sur une surface inférieure à la surface totale du panneau.

11. Procédé selon la revendication 9 ou 10, dans lequel une couche centrale de remplissage (400) est prévue dans des zones de la couche centrale (106) où il n'y a pas d'élément déformable (500).

12. Procédé selon la revendication 11, dans lequel la couche centrale de remplissage (400) est utilisée pour adapter l'épaisseur du panneau afin d'obtenir un épaississement ou un amincissement du panneau.

13. Procédé selon l'une quelconque des revendications 9 à 12, dans lequel la couche centrale (106) est prévue sous la forme d'une matrice de matière plastique (502) contenant l'élément déformable (500).

14. Procédé selon l'une quelconque des revendications 9 à 13, qui est utilisé pour produire un panneau de carrosserie industrielle.

15. Procédé selon l'une quelconque des revendications 9 à 14, dans lequel l'élément déformable (500) est prévu sous l'une quelconque des formes suivantes : une tresse, un fil, une plaque perforée, une maille, une feuille.
